(19) Europäisches Patentamt

European Patent Office

Office européen des brevets

(11) **EP 0 458 272 B1**

(12) **EUROPEAN PATENT SPECIFICATION**

(45) Date of publication and mention
of the grant of the patent:
**03.09.1997  Bulletin 1997/36**

(51) Int Cl.6: **G01S 17/58**, G01S 7/48

(21) Application number: **91108199.0**

(22) Date of filing: **21.05.1991**

(54) **Doppler velocimeter**

Dopplergeschwindigkeitsmesser

Vélocimètre à effet Doppler

(84) Designated Contracting States:
**DE FR GB IT NL**

(30) Priority: **21.05.1990  JP 130622/90**

(43) Date of publication of application:
**27.11.1991  Bulletin 1991/48**

(73) Proprietor: **CANON KABUSHIKI KAISHA
Tokyo (JP)**

(72) Inventors:
- **Ishida, Yasuhiko, c/o Canon Kabushiki Kaisha
  Ohta-ku, Tokyo (JP)**
- **Takamiya, Makoto, c/o Canon Kabushiki Kaisha
  Ohta-ku, Tokyo (JP)**
- **Kadowaki, Hidejiro, c/o Canon Kabushiki Kaisha
  Ohta-ku, Tokyo (JP)**
- **Sugiyama, Hiroshi, c/o Canon Kabushiki Kaisha
  Ohta-ku, Tokyo (JP)**

(74) Representative: **Kinne, Reinhard, Dipl.-Ing. et al
Patentanwaltsbüro
Tiedtke-Bühling-Kinne & Partner
Bavariaring 4
80336 München (DE)**

(56) References cited:
EP-A- 0 127 244          EP-A- 0 302 444
EP-A- 0 391 278

## Description

### BACKGROUND OF THE INVENTION

#### Field of the Invention

The present invention relates to an apparatus and a method for detecting an information of the displacement of an object. More particularly, it relates to a Doppler velocimeter that detects the shift of a frequency of illuminating light and thereby measures the speed of a moving object, without contact.

#### Related Background Art

As an apparatus that measures the movement speed of a moving object without contact and with a high degree of accuracy, a Doppler velocimeter has previously been known. The Doppler velocimeter applies illuminating light, such as a laser beam or the like, to a moving object and measures the movement velocity of the above moving object by utilizing the effect whereby the frequency of scattered light from the moving object shifts proportionally to the movement velocity, the so-called Doppler effect.

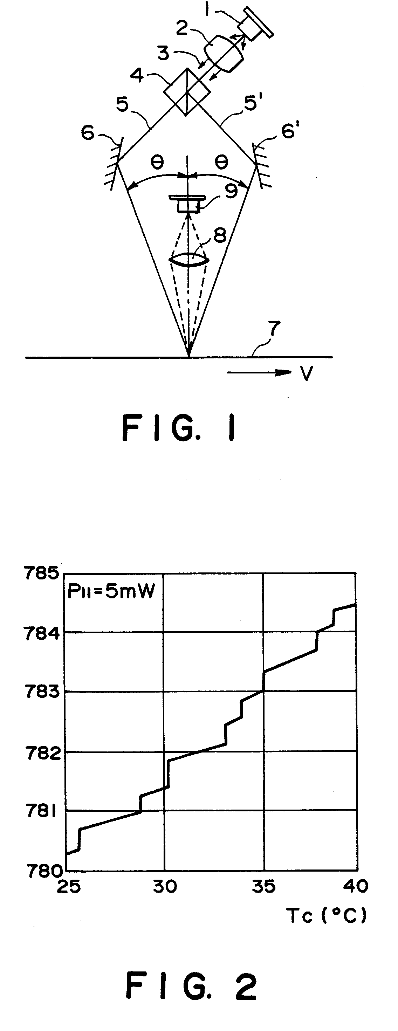

A typical construction of a laser Doppler velocimeter is shown in Fig. 1 by way of an example of a conventional Doppler velocimeter.

In Fig. 1, reference numeral 1 denotes a laser beam source; reference numeral 2 denotes a collimator lens; reference numeral 3 denotes a parallel light flux; reference numeral 4 denotes a beam splitter; reference numerals 6 and 6' each denote a mirror; reference numeral 7 denotes a moving object, which object moves in the direction of the arrow at a velocity V; reference numeral 8 denotes a condenser lens; and reference numeral 9 denotes a photodetector.

A laser beam emitted from the laser beam source 1 is made into the parallel light flux 3 by means of the collimator lens 2. The laser beam is then divided into two split light fluxes 5 and 5' by means of the beam splitter 4. After reflection by the mirrors 6 and 6', the two split light fluxes are projected to the object 7 moving at a velocity V at an incident angle $\theta$. Scattered light from the moving object is detected by the photodetector 9 via the condenser lens 8. The frequency of the scattered light from the two split light fluxes undergoes a Doppler shift of $+\Delta f$ and $-\Delta f$, respectively, in proportion to the movement velocity V. If the wavelength of the laser beam is made to be $\lambda$, $\Delta f$ can be expressed by the following equation (1):

$$\Delta f = V \sin \theta/\lambda \qquad (1)$$

The scattered light fluxes which undergo the Doppler shift of $+\Delta f$ or $-\Delta f$ interfere with each other, causing changes in brightness and darkness on the light-receiving surface of the photodetector 9. The frequency F of the scattered light is given by the following equation (2):

$$F = 2f = 2V \sin \theta/\lambda \qquad (2)$$

Therefore, the measurement of the frequency (hereinafter referred to as the Doppler frequency) of the output signal of the photodetector 9 enables the velocity V of the moving object 7 to be determined on the basis of equation (2).

In the laser Doppler velocimeter of the prior art as described above, as can be seen from equation (2), the Doppler frequency F is inversely proportional to the wavelength $\lambda$ of the laser. Therefore, it is required that a laser beam source, the laser of which is stable, be used for a laser Doppler velocimeter. As a laser beam source in which continuous oscillation is possible and the laser of which is stable, a gas laser using He-Ne or the like is often used. However, its laser oscillator is large and a high voltage is required for the power supply. This presents the problem that the apparatus is large and expensive. Although laser diodes (or semiconductor lasers) used in compact discs, video discs, optical fiber communication, and so forth are ultra-small and can be easily driven, they are dependent on temperatures.

Fig. 2 (quoted from Photosemiconductor Elements Part, "'87 Mitsubishi Semiconductor Data Book") shows an example of standard temperature dependency of laser diodes. The sections where the wavelength changes continuously are mainly caused by changes in the refractive index of the active layers of laser diodes due to temperature, which is 0.05 to 0.06 nm/°C. The section where the wavelength is changed uncontinuously are called vertical mode hopping, which is 0.2 to 0.3 nm/°C.

To stabilize the wavelength, a method of controlling laser diodes at a constant temperature is generally used. In this method, temperature control members, such as heaters, radiators, temperature sensors, or the like, are mounted on laser diodes with a small resistance to heat, and it is required that temperature control be performed precisely. Laser Doppler velocimeter are relatively large, and costs will rise. Furthermore, instability due to the above-mentioned vertical mode hopping cannot be completely eliminated.

Document EP-A-0 391 278, which is state of the art according to Art. 54 (3) EPC, discloses a laser Doppler velocimeter which solves the above-mentioned problems and which comprises the steps of applying a laser beam as a light flux to a diffraction grating, applying two diffracted split light fluxes of the +n-th order and -n-th order (n: 1, 2, ⋯) among diffracted light fluxes thus obtained other than that of the zero-order to a moving object at an intersection angle which is the same as the angle made by the two split light fluxes, and detecting the scattered light from the moving object by using a detection means formed by a photodetector. This method will now be explained.

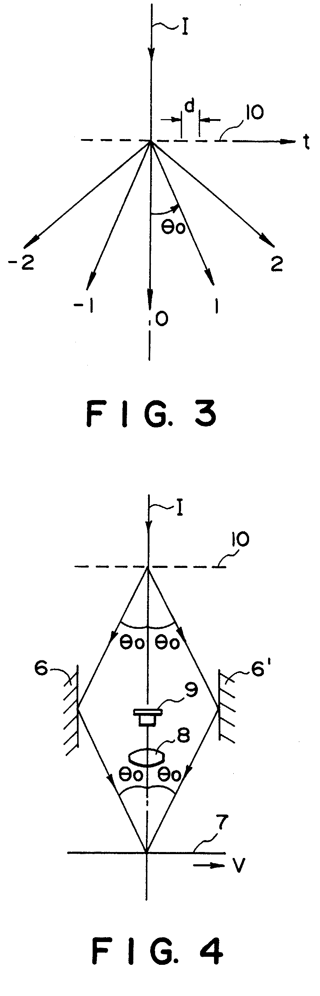

Fig. 3 shows an example of diffraction when a laser beam I is projected onto a transmission type diffraction grating 10 having a grating pitch d to be perpendicular to the direction t in which the grating is arrayed. In such a case, the diffraction angle $\theta_0$ becomes as shown in the following equation:

$$\sin \theta_0 / \lambda = m \, \lambda/d$$

where m: diffraction order (0, 1, 2, ⋯), $\lambda$: wavelength of the light.

±n-th order beams other than the zero-order beam are expressed by the following equation (3):

$$\sin \theta_0 = \pm n \, \lambda/d \qquad (3)$$

where n: 1, 2, ⋯.

Fig. 4 is a view showing a case in which two split light fluxes are applied to a specimen object 7 by means of an optical system comprising mirrors 6 and 6' in such a way that the intersection angle at the object becomes twice the diffraction angle, i.e. becomes $2\theta_0$. The Doppler frequency F detected by the photodetector 9 is expressed by the following equation (4) by using equations (2) and (3):

$$F = 2 \, V \sin \theta_0 / \lambda = 2 \, n \, V/d \qquad (4)$$

Thus, the Doppler frequency F does not depend on the wavelength $\lambda$ of the light of the laser beam I. This frequency is inversely proportional to the grating pitch d of the diffraction grating 10 and proportional to the speed of the specimen object 7. Since the grating pitch d can be made satisfactorily stable, a frequency which is proportional to only the speed of the moving object 7 can be obtained for the Doppler frequency F. The same is true even when a reflection type diffraction grating is used for the diffraction grating 10. As described above, the optical system is formed such that the intersection angle is made to be $2\theta_0$, wherein $(\sin \theta_0 / \lambda)$ is maintained constant. Thus, a high-precision measurement which is not dependent on a wavelength can be realized.

If light having a generally high coherency, such as a laser beam or the like, is applied to an object, scattered light undergoes a random phase modulation due to very small irregularities on the surface of the object, and a speckled pattern is formed on the observation surface. When an object (which may be a fluid) moves in the laser Doppler velocimeter, changes in brightness and darkness due to the Doppler shift are modulated by irregular changes in brightness and darkness due to the flow of the speckled pattern on the detection surface of the photodetector. Also, the output signal of the photodetector is modulated by changes in the transmittance (or reflectance) of the specimen object.

In the above-mentioned laser Doppler velocimeter, the frequency of changes in brightness and darkness due to the flow of the speckled pattern and the frequency of changes in the transmittance (or reflectance) of a specimen object are generally lower than the Doppler frequency expressed by the above equation (4). Therefore, a method is used in which low-frequency components are electrically eliminated by making the output of the photodetector pass through a high-pass filter so that only Doppler signals are extracted. If the speed of the specimen object is slow and the Doppler frequency is low, the frequency difference between the Doppler frequency and low-frequency components becomes small. In order to deal with a case where a high-pass filter cannot be used or it is desired to detect the direction of the speed, document EP-A-0 391 278 discloses the apparatus shown in Fig. 5.

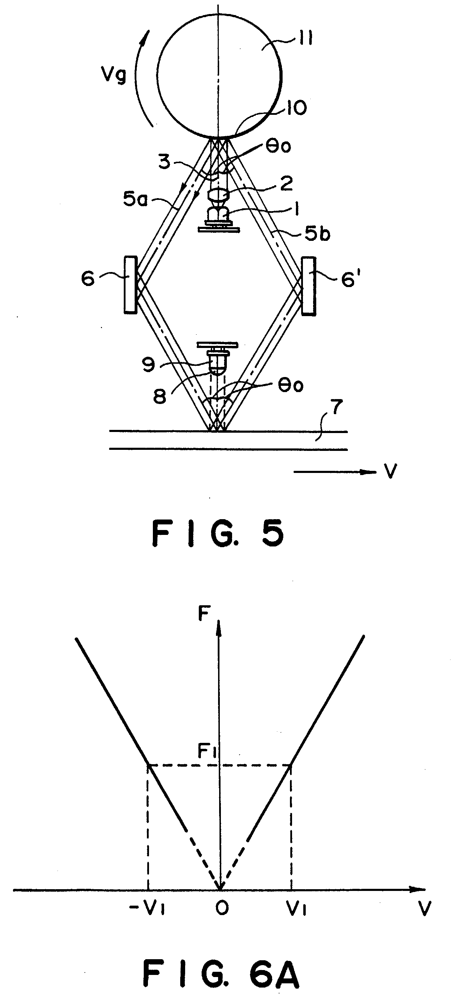

A diffraction grating 10 having a grating pitch d is moved at a velocity Vg, as shown in Fig. 5. When a laser light flux is projected onto the moving diffraction grating 10, the laser light flux is divided into ±n-th order diffracted split light fluxes 5a and 5b. Each of the split lights undergoes positive and negative Doppler shifts ±Vg/nd, respectively. If the wavelength of the light is made to be $\lambda$, the diffraction angle $\theta_0$ satisfies the following condition:

$$\sin \theta_0 = \lambda/n \, d \qquad (5)$$

When these two split light fluxes are made incident on the specimen object 7 at a velocity V by means the mirrors 6 and 6' using these ±n-th order lights in such a way that the intersection angle at the object 7 becomes $2\theta_0$, concerning the scattered light from the specimen object 7, ±n-th order light undergoes a Doppler shift of (Vg + V)/nd and -n-th order light undergoes a Doppler shift of -(Vg + V)/nd. These light fluxes interfere with each other, and the Doppler frequency F becomes the following:

$$F = 2 \, (Vg + V) / nd \qquad (6)$$

Thus, a Doppler frequency which is not dependent on the wavelength of the laser beam can be obtained. That is, even if the velocity of the specimen object 7 is slow, the frequency difference between the Doppler frequency and low-frequency components resulting from the flow of the speckled pattern or from the changes in the transmittance (or reflectance) of the specimen object can be satisfactorily extracted by the movement velocity Vg of the diffraction grating. Velocity detection is made possible by a method in which low-frequency components are electrically eliminated by making the output of the photodetector pass through a high-pass filter so that only Doppler signals are extracted.

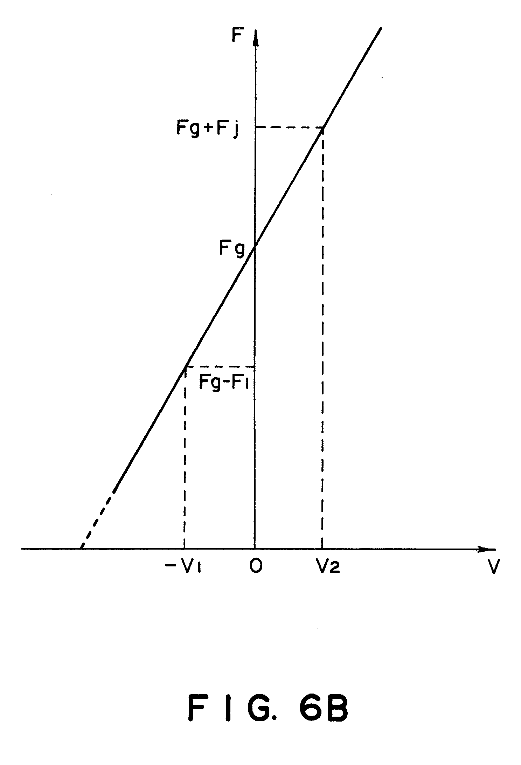

Fig. 6 shows the relationship between the velocity V of a specimen object in a laser Doppler velocimeter which uses a diffraction grating and the Doppler frequency F. Fig. 6A shows a case where the diffraction grating is fixed; Fig. 6B shows a case where the movement speed of the diffraction grating is made to be Vg. As can be seen from these figures, in Fig. 6A, even if a certain frequency $F_1$ is detected, it is impossible to judge the direction of the movement of the object because the two velocities $V_1$ and $-V_1$ whose directions differ from each other match. However, in Fig. 6B, the Doppler frequency $F = Fg + F_1$ can be obtained for the velocity $V_1$, and the Doppler frequency $F = Fg - F_1$ can be obtained for the velocity $-V_1$. The direction of the velocity V can also be detected.

That is, if the movement velocity Vg of the diffraction grating is controlled, the following relation holds by using the above-mentioned equation (6):

$$V = F \, (d \, / \, 2) - Vg \qquad (7)$$

Therefore, the detection of F enables V to be determined, as expressed by equation (7).

Document EP-A-0 127 244 discloses an apparatus and a method for detecting an information of the displacement of an object. The known apparatus comprises a light source means, a frequency shifting means for shifting the frequency of a light flux incident from the light source means, the frequency shifting means including a diffraction grating by which two frequency-shifted split light fluxes are formed which are projected onto the object, and an optical system which maintains (sin $\theta_o/\lambda$) constant, wherein $\theta_o$ is one half of the intersection angle at an intersection section of the split light fluxes on the object. This optical system of the known apparatus comprises two lenses which are arranged such that the diffraction grating and the object are optically conjugate with regard to each other. The known apparatus further comprises a detection means for detecting the split light fluxes after reflection on the object, wherein the frequency of the light thereof has undergone a Doppler shift proportional to the speed of the object. Further, the known apparatus comprises a displacement information detection means for detecting the displacement information of the object on the basis of the detection result of the dectection means, for example by applying the above equation (7).

The precision of the measurement of, for example, the speed of the movement of the object by means of the known apparatus depends inter alia on the extent to which the movement velocity $V_g$ of the diffraction grating can be kept constant (see equation (7)). However, variations in the movement velocity and excentricities of the rotation of the diffraction grating can hardly be avoided and therefore degrade the precision of the measurement.

Document EP-A-0 302 444 discloses a Doppler velocimeter in which the light source means comprises two laser diodes which emit two light fluxes having different frequencies. A light-flux dividinq means comprised of two parallel plates divides each of the two light fluxes into first and second divided light fluxes. The first divided light flux intersects on the object, and the scattered light from the intersection position is detected. The two second divided light fluxes are combined and are detected by a second detection means. The measurement of the object velocity is performed by a difference between the detection signal obtained by the detection of the combined second light fluxes and the detection signal of the light scattered at the intersection position. Due to the fact that no diffraction grating is used to generate the two light fluxes having different frequencies, the precision of the measurement is not influenced by variations in the movement velocity and by the excentricity of the rotation of a diffraction grating.

## SUMMARY OF THE INVENTION

It is an object of the present invention to provide an apparatus and a method of the kind disclosed in EP-A-0 127 244, the apparatus and the method being improved in so far as they are more precise than the known apparatus and method, particular in that no errors occur due to variations in the movement velocity, the exentricity of the rotation etc. oF the diffraction grating.

This object is achieved by the apparatus according to claim 1 and by the method according to claim 9.

Further developments of the apparatus and method according to the invention are defined in claims 2 to 8 and 9 to 14.

Embodiments of the present invention will be explained hereinbelow in detail with reference to the accompanying drawings.

## BRIEF DESCRIPTION OF THE DRAWINGS

Fig. 1 is a view showing the construction of a conventional Doppler velocimeter;

Fig. 2 is a view showing the characteristics of a semiconductor laser;

Fig. 3 is an explanatory view of the diffraction grating;

Figs. 4 and 5 are views showing the construction of the Doppler velocimeter according to EP-A-0 391 278;

Figs. 6A and 6B are views showing the relationship between the velocity V of a moving object and the Doppler frequency F;

Fig. 7 is a view showing the construction of an embodiment of the present invention;

Fig. 8 is a view showing the electrical processing circuit of the embodiment; and

Fig. 9 is a view showing the construction of another embodiment.

## DESCRIPTION OF THE PREFERRED EMBODIMENTS

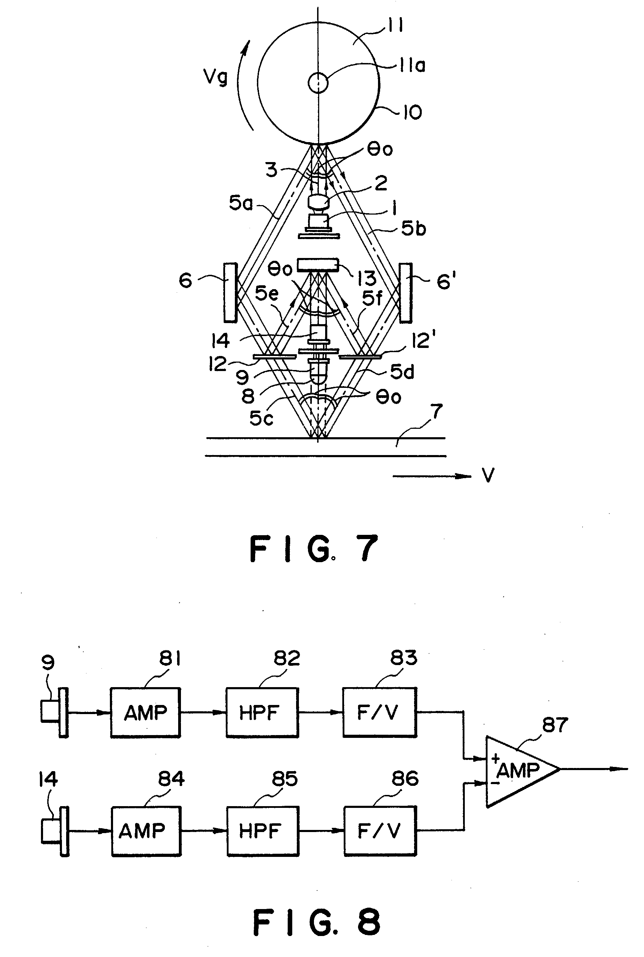

Fig. 7 shows the construction of an embodiment of the apparatus according to the present invention. In Fig. 7, the diffraction grating 10 is arrayed on the side of a rotatable cylinder 11 with a grating pitch d being 1.6 μm. The diffraction grating 10 and the rotatable cylinder 11 form a frequency shifting means. The diffraction grating is designed to be able to efficiently extract ±n-th order diffracted lights. A laser beam having a wavelength of approximately 0.78 μm, which is emitted from the light source means formed by the laser diode 1, is made into a parallel light flux having a diameter of about 2 mm by means of the collimator lens 2. The cylinder 11 is mounted on the driving shaft lla of a DC motor (not shown) and driven at a constant peripheral velocity Vg. When the parallel light flux 3 is made incident on the reflection type diffraction grating 10 formed on the periphery of the rotating cylinder 11, the ±first order diffracted split light fluxes 5a and 5b are emitted at a diffraction angle $\theta \approx$ 29°. On this occasion, since the diffraction grating 10 is moving at a peripheral velocity Vg, the diffracted split light fluxes 5a and 5b undergo positive and negative Doppler shifts ±Vg/d, respectively. The diffracted split light fluxes 5a and 5b reflected on the mirrors 6 and 6' which are parallel to each other are each divided into two light fluxes by half mirrors 12 and 12'. The two mirrors 6 and 6' form an optical system of the apparatus, while the half-mirrors 12 and 12' form a light - flux dividing means of the apparatus. First divided light fluxes 5c and 5d are projected onto the specimen object 7 which may be a fluid; the other, second divided light fluxes 5e and 5f are projected onto the a reflection type diffraction grating 13. The grating pitch d of the diffraction grating 13 has been set to 1.6 μm which is the same as the grating pitch of the diffraction grating 10 so that the second light fluxes are efficiently diffracted in the direction of a photodetector 14 which forms a second detection means.

The photodetector 9 which forms a first detection means receives the first light fluxes 5c and 5d after reflection on the specimen object 7 and photoelectrically converts it. In this system, the intersection angle at the specimen object 7 is made to be $2\theta_0$, and $(\sin \theta_0/\lambda)$ is maintained constant in the same manner as described above, wherein $\lambda$ is the wavelength of the light. The photodetector 9 outputs a signal having a Doppler frequency shown below which is not dependent on the wavelength $\lambda$ of the laser beam, the Doppler frequency being proportional to the peripheral velocity Vg of the diffraction grating 10 plus the movement velocity V of the specimen object 7, and the Doppler frequency being obtained by substituting 1 for n in the above-mentioned equation (6):

$$F = 2 (Vg + V) / d \qquad (8)$$

Meanwhile, the photodetector 14 receives the second light fluxes 5e and 5f after diffraction by the diffraction grating 13 and photoelectrically converts it. In this system also the interseciton angle at the diffraction grating 13 is made to be $2\theta_0$ and $(\sin \theta_0/\lambda)$ is maintained constant. The photodetector 14 outputs a signal having a Doppler frequency shown below which is not dependent on the wavelength of the laser beam and which is proportional to the peripheral velocity Vg of the diffraction grating 10:

$$Fg = 2 Vg / d \qquad (9)$$

Here, the computation of F - Fg yields the following:

$$F - Fg = 2 V / d. \qquad (10)$$

Thus, the movement velocity Vg of the diffraction grating 10 is eliminated and the movement velocity V of the moving object 7 can be determined. This computation will be performed as described below by using a displacement information detecting means shown in Fig. 8.

As shown in Fig. 8, the output signal from the photodetector 9 is amplified by an amplifier (AMP) 81. The signal amplified by the amplifier 81 is input to a frequency-voltage converter (F/V) 83 via a high-pass filter (HPF) 82. The frequency-voltage converter 83 outputs a signal according to F in the above-mentioned equation (8).

Meanwhile, the output signal from the photodetector 14 is amplified by an amplifier (AMP) 84. The signal amplified by the amplifier 84 is input to a frequency-voltage converter (F/V) 86 via a high-pass filter (HPF) 85. The frequency-voltage converter 86 outputs a signal according to $F_g$ in the above-mentioned equation (9). Next, a differential amplifier 87 outputs a voltage of the difference between the voltage of the frequency-voltage converter 83 and that of the frequency-voltage converter 86 with the symbol ±. That is, the differential amplifier 87 substantially performs the computation of F - Fg. This output voltage corresponds to 2 V/ d, as shown in the above-mentioned equation (10). The absolute value thereof indicates the absolute value of the velocity of the specimen object 7; the symbol ± indicates the direction of the movement. In the present embodiment, the symbol + indicates the direction of the arrow in Fig. 7.

According to this method, the reference point can be easily adjusted if the electrical circuit is set in such a way that the output of the differential amplifier 87 becomes zero when V = 0 after the specimen object is stopped.

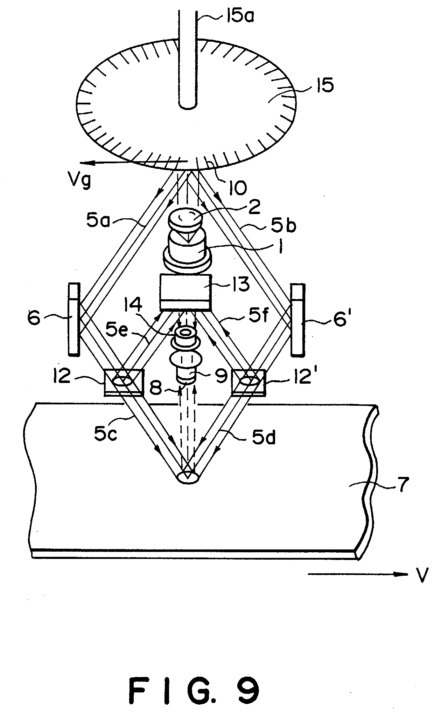

Next, another embodiment of the present invention will be explained with reference to Fig. 9. The same reference numerals are used to indicate like elements in Figs. 7 and 9.

Regarding the means for moving the diffraction grating in the above embodiment, the diffraction grating is moved by rotating a cylinder on whose side the diffraction grating is formed. In contrast, the present embodiment is characterized by the use of a disc instead of a cylinder.

The reflection type diffraction grating 10 having a grating pitch d of 1.6 μm is formed around the circumference of a rotating disc 15. The disc 15 is mounted on a driving shaft 15a of the motor. By rotating the driving shaft 15a, the disc 15 rotates, and the diffraction grating 10 formed on the disc 15 moves at a velocity Vg in relation to the incident light flux. Thus, diffracted split light fluxes 5a and 5b are produced. They have undergone a Doppler shift ±Vg/nd by means of the diffraction grating 10, and can be measured by the same principle as that of the above embodiment.

The present invention is not limited to the forms of the above-mentioned embodiments. Various modifications can be made. For example, transmission type diffraction gratings may be used for the diffraction grating 10 for producing diffracted light. The same effect can be obtained by using a scattering reflection member, for example, one in which the surface of an aluminum member is roughened, in place of the diffraction grating 13 which is used as a reference object.

The measurement of the velocity V is not limited to the method shown in Fig. 8. The velocity V may be determined by a method in which velocities V' (= V + Vg) and Vg are measured by using Doppler frequencies F and Fg and V is determined from V = V' - Vg.

Although an example was shown in the above-mentioned embodiments using the ± first-order diffracted lights emitted from the diffraction grating 10, ±n-th (n: natural number) order diffracted lights may be used. Also, light fluxes of different orders, for example, two light fluxes of zero order and n-th order, may be used.

According to the above-mentioned embodiments, detection accuracy is improved because measurement values are not affected by the speed of a moving diffraction grating. Also, it is not necessary to control the movement of the moving diffraction grating with a high degree of accuracy. A compact, low-cost apparatus can be used because the driving mechanism is simple.

## Claims

1. An apparatus for detecting an information of the displacement of an object (7), comprising:

    light source means (1);
    frequency shifting means (10, 11; 10, 15) for shifting the frequency of a light flux (3) incident from the light source means (1), said frequency shifting means (10, 11; 10, 15) including a diffraction grating (10) by which a plurality of frequency-shifted split light fluxes (5a, 5b) are formed;

    light-flux dividing means (12, 12') for dividing each of said frequency-shifted split light fluxes (5a, 5b) into first and second light fluxes (5c, 5e; 5d, 5f), said first light fluxes (5c, 5d) being projected onto the object (7) and said second light fluxes (5e, 5f) being projected in a different direction so as not to be incident on the object (7);

    wherein said second light fluxes (5e, 5f) are combined at a position different from the position of said light-flux dividing means (12, 12');

    an optical system (6, 6') which maintains (sin $\theta_o/\lambda$) constant, wherein $\theta_o$ is one half of the intersection angle at an intersection section of said first light fluxes (5c, 5d) on the object (7) and wherein $\lambda$ is the wavelength of light;

    first detection means (9) for detecting the first light fluxes (5c, 5d) after reflection on the object (7), the frequency of the light thereof having undergone a Doppler shift proportional to the speed of the object (7);

    second detection means (14) for detecting the second light fluxes (5e, 5f) after their combination, the frequency of the light thereof not having been shifted by a Doppler shift due to the motion of the object (7);

    displacement information detection means (81 to 87) for detecting the displacement information of the object (7) on the basis of a difference between the detection results of the first detection means (9) and of the second detection means (14).

2. The apparatus according to Claim 1, wherein the first detection means (9) detects light from an intersection section of said first light fluxes (5c, 5d) on the object (7), and wherein the second detection means (14) detects light from an intersection section of said second light fluxes (5e, 5f).

3. The apparatus according to Claim 2, wherein the frequency shifting means (10, 11; 10, 15) shifts the frequency of each of said split light fluxes (5a, 5b) by moving said diffraction grating (10).

4. The apparatus according to Claim 3, wherein said diffraction grating (10) is cylindrical and (10, 11) rotates.

5. The apparatus according to Claim 3, wherein said diffraction grating (10) is disc-shaped and (10, 15) rotates.

6. The apparatus according to Claim 1, wherein said displacement information detection means (81 to 87) detects the displacement information of the object by detecting the difference between the frequency shifts of lights detected by the first detection means (9) and second detection means (14).

7. The apparatus according to Claim 1, wherein the displacement information detection means (81 to 87) detects the speed as information on the displacement.

8. The apparatus according to claim 1, wherein either a diffraction member (13) or a scattering member is arranged at said position for combining, and said second detection means (14) detects the light generated by combining diffracted or scattered light fluxes of said second light fluxes (5e, 5f).

9. A method of detecting an information of the displacement of an object (7), comprising the steps of:

shifting the frequency of a light flux (3) incident from a light source means (1) by means of a diffraction grating (10) by which a plurality of frequency-shifted split light fluxes (5a, 5b) are formed;
dividing each of said frequency-shifted split light fluxes (5a, 5b) into first and second light fluxes (5c, 5e; 5d, 5f), said first light fluxes (5c, 5d) being projected onto the object (7) and said second light fluxes (5e, 5f) being projected in a different direction so as not to be incident on the object (7);
wherein said second light fluxes (5e, 5f) are combined at a position different from the position at which said split light fluxes (5a, 5b) are divided;
wherein $(\sin \theta_o / \lambda)$ is maintained constant, wherein $\theta_o$ is one half of the intersection angle at an intersection section of said first light fluxes (5c, 5d) on the object (7) and wherein $\lambda$ is the wavelength of light;
performing a first detection for detecting the first light fluxes (5c, 5d) after reflection on the object (7), the frequency of the light thereof having undergone a Doppler shift proportional to the speed of the object (7);
performing a second detection for detecting the second light fluxes (5e, 5f) after their combination, the frequency of the light thereof not having been shifted by a Doppler shift due to the motion of the object (7); and
detecting the displacement information of the object (7) on the basis of a difference between the detection results of the first detection and of the second detection.

10. The method according to Claim 9, wherein at the first detection light from an intersection section of said first light fluxes (5c, 5d) on the object (7) is detected, and wherein at the second detection light from an intersection section of said second light fluxes (5e, 5f) is detected.

11. The method according to Claim 10, wherein the frequency of each of said split light fluxes (5a, 5b) is shifted by moving said diffraction grating (10).

12. The method according to Claim 11, wherein said diffraction grating (10) is cylindrical and rotates.

13. The method according to Claim 11, wherein said diffraction grating (10) is disc-shaped and rotates.

14. The method according to Claim 10, wherein said displacement information is detected by detecting the difference between the frequency shifts of lights detected at the first and at the second detection.

**Patentansprüche**

1. Vorrichtung zum Nachweisen von Information über die Verschiebung eines Objekts (7), umfassend:

Lichtquelleneinrichtungen (1);
Frequenzverschiebungseinrichtungen (10, 11; 10, 15) zum Verschieben der Frequenz eines Lichtstroms (3), der von der Lichtquelleneinrichtung (1) einfällt, wobei die Frequenzverschiebungseinrichtungen (10, 11; 10, 15) ein Beugungsgitter (10) umfassen, durch das eine Vielzahl von frequenzverschobenen geteilten Lichtströmen (5a, 5b) gebildet wird;
Lichtstrom-Teilungseinrichtungen (12, 12') zum Teilen von jedem frequenzverschobenen geteilten Lichtstrom (5a, 5b) in erste und zweite Lichtströme (5c, 5e; 5d, 5f), wobei die ersten Lichtströme (5c, 5d) auf das Objekt (7) projiziert werden und die zweiten Lichtströme (5e, 5f) in eine verschiedene Richtung projiziert werden, so daß sie nicht auf das Objekt (7) einfallen;
wobei die zweiten Lichtströme (5e, 5f) an einer Position kombiniert werden, die von der Position der Lichtstrom-Teilungseinrichtungen (12, 12') verschieden ist;
ein optisches System (6, 6'), das $(\sin \theta_0 / \lambda)$ konstant hält, worin $\theta_0$ der halbe Schnittwinkel bei einem Schnittbereich der ersten Lichtströme (5c, 5d) auf dem Objekt (7) ist und worin $\lambda$ die Wellenlänge von Licht ist;
erste Nachweiseinrichtungen (9) zum Nachweisen der ersten Lichtströme (5c, 5d) nach der Reflexion auf dem Objekt (7), wobei ihre Lichtfrequenz einer Doppler-Verschiebung unterzogen worden ist, die proportional zu der Geschwindigkeit des Objekts (7) ist;
zweite Nachweiseinrichtungen (14) zum Nachweisen der zweiten Lichtströme (5e, 5f) nach ihrer Kombination, wobei ihre Licht frequenz nicht durch eine Doppler-Verschiebung aufgrund der Bewegung des Objekts (7) verschoben worden ist;

Verschiebungsinformations-Nachweiseinrichtungen (81 bis 87) zum Nachweisen der Verschiebungsinformation des Objekts (7) auf der Grundlage einer Differenz zwischen den Nachweisergebnissen der ersten Nachweiseinrichtung (9) und der zweiten Nachweiseinrichtung (14).

2. Vorrichtung nach Anspruch 1, bei der die erste Nachweiseinrichtung (9) Licht von einem Schnittbereich der ersten Lichtströme (5c, 5d) auf dem Objekt (7) nachweist und die zweite Nachweiseinrichtung (14) Licht von einem Schnittbereich der zweiten Lichtströme (5e, 5f) nachweist.

3. Vorrichtung nach Anspruch 2, bei der die Frequenzverschiebungseinrichtung (10, 11; 10, 15) die Frequenz von jedem der geteilten Lichtströme (5a, 5b) verschiebt, indem sie das Beugungsgitter (10) bewegt.

4. Vorrichtung nach Anspruch 3, bei der das Beugungsgitter (10) zylindrisch ist und sich dreht.

5. Vorrichtung nach Anspruch 3, bei der das Beugungsgitter (10) scheibenförmig ist und sich dreht.

6. Vorrichtung nach Anspruch 1, bei der die Verschiebungsinformation-Nachweiseinrichtung (81 bis 87) die Verschiebungsinformation des Objekts nachweist, indem sie die Differenz zwischen den Frequenzverschiebungen der Lichtstrahlen nachweist, die durch die erste Nachweiseinrichtung (9) und die zweite Nachweiseinrichtung (14) nachgewiesen worden sind.

7. Vorrichtung nach Anspruch 1, bei der die Verschiebungsinformation-Nachweiseinrichtung (81 bis 87) die Geschwindigkeit als Information über die Verschiebung nachweist.

8. Vorrichtung nach Anspruch 1, bei der entweder ein Beugungselement (13) oder ein Streuelement an der Position zum Kombinieren angeordnet ist und die zweite Nachweiseinrichtung (14) das durch Kombinieren der gebeugten oder gestreuten Lichtströme der zweiten Lichtströme (5e, 5f) erzeugte Licht nachweist.

9. Verfahren zum Nachweisen von Information über die Verschiebung eines Objekts (7), umfassend die Schritte zum:

Verschieben der Frequenz eines Lichtstroms (3), der von einer Lichtquelleneinrichtung (1) einfällt, durch ein Beugungsgitter (10), wodurch eine Vielzahl von frequenzverschobenen geteilten Lichtströmen (5a, 5b) gebildet wird;

Teilen von jedem frequenzverschobenen geteilten Lichtstrom (5a, 5b) in erste und zweite Lichtströme (5c, 5e; 5d, 5f), wobei die ersten Lichtströme (5c, 5d) auf das Objekt (7) projiziert werden und die zweiten Lichtströme (5e, 5f) in eine verschiedene Richtung projiziert werden, so daß sie nicht auf das Objekt (7) einfallen;

wobei die zweiten Lichtströme (5e, 5f) an einer Position kombiniert werden, die von der Position verschieden ist, an der die geteilten Lichtströme (5a, 5b) geteilt werden;

wobei (sin $\theta_0/\lambda$) konstant gehalten wird, wobei $\theta_0$ der halbe Schnittwinkel an einem Schnittbereich der ersten Lichtströme (5c, 5d) auf dem Objekt (7) ist und $\lambda$ die Lichtwellenlänge ist;

Durchführen eines ersten Nachweises zum Nachweisen der ersten Lichtströme (5c, 5d) nach Reflexion auf dem Objekt (7), wobei ihre Lichtfrequenz einer Doppler-Verschiebung unterzogen worden ist, die proportional zur Geschwindigkeit des Objekts (7) ist;

Durchführen eines zweiten Nachweises zum Nachweisen der zweiten Lichtströme (5e, 5f) nach ihrer Kombination, wobei ihre Lichtfrequenz nicht durch eine Doppler-Verschiebung aufgrund der Bewegung des Objekts (7) verschoben worden ist; und

Nachweisen der Verschiebungsinformation des Objekts (7) auf der Grundlage einer Differenz zwischen den Nachweisergebnissen des ersten Nachweises und des zweiten Nachweises.

10. Verfahren nach Anspruch 9, bei dem bei dem ersten Nachweis Licht von einem Schnittbereich der ersten Lichtströme (5c, 5d) auf dem Objekt (7) nachgewiesen wird und bei dem zweiten Nachweis Licht von einem Schnittbereich der zweiten Lichtströme (5e, 5f) nachgewiesen wird.

11. Verfahren nach Anspruch 10, bei dem die Frequenz von jedem der geteilten Lichtströme (5a, 5b) verschoben wird, indem das Beugungsgitter (10) bewegt wird.

12. Verfahren nach Anspruch 11, bei dem das Beugungsgitter (10) zylindrisch ist und sich dreht.

13. Verfahren nach Anspruch 11, bei dem das Beugungsgitter (10) scheibenförmig ist und sich dreht.

14. Verfahren nach Anspruch 10, bei dem die Verschiebungsinformation nachgewiesen wird, indem die Differenz zwischen den Frequenzverschiebungen der bei dem ersten und dem zweiten Nachweis

**EP 0 458 272 B1**

nachgewiesenen Lichtstrahlen bestimmt wird.

## Revendications

1. Appareil pour détecter une information de déplacement d'un objet (7), comprenant:

   un moyen (1) formant source de lumière;
   un moyen (10, 11; 10, 15) de décalage de fréquence pour décaler la fréquence d'un flux lumineux (3) tombant du moyen (1) formant source de lumière, ledit moyen (10, 11; 10, 15) de décalage de fréquence comportant un réseau de diffraction (10) par lequel une pluralité de flux lumineux séparés décalés en fréquence (5a, 5b) sont formés;
   un moyen (12, 12') de division de flux lumineux pour diviser chacun desdits flux lumineux (5a, 5b) séparés décalés en fréquence en des premiers et seconds flux lumineux (5c, 5e; 5d, 5f), lesdits premiers flux lumineux (5c, 5d) étant projetés sur l'objet (7) et lesdits seconds flux lumineux (5e, 5f) étant projetés dans une direction différente, de manière à ne pas tomber sur l'objet (7);
   dans lequel lesdits seconds flux lumineux (5e, 5f) sont combinés dans une position différente de la position dudit moyen (12, 12') de division de flux lumineux;
   un système optique (6, 6') qui maintient constant $(\sin \theta_0/\lambda)$, $\theta_0$ étant la moitié de l'angle d'intersection au niveau d'une section d'intersection desdits premiers flux lumineux (5c, 5d) sur l'objet (7) et $\lambda$ étant la longueur d'onde de la lumière;
   un premier moyen de détection (9) pour détecter les premiers flux lumineux (5c, 5d) après réflexion sur l'objet (7), la fréquence de leur lumière ayant subi un décalage Doppler proportionnel à la vitesse de l'objet (7);
   un second moyen de détection (14) pour détecter les seconds flux lumineux (5e, 5f) après leur combinaison, la fréquence de leur lumière n'ayant pas été décalée par un décalage Doppler dû au déplacement de l'objet (7);
   un moyen (81 à 87) de détection d'information de déplacement pour détecter l'information de déplacement de l'objet (7) sur la base de la différence entre les résultats de détection du premier moyen de détection (9) et du second moyen de détection (14).

2. Appareil selon la revendication 1, dans lequel le premier moyen de détection (9) détecte la lumière en provenance d'une section d'intersection desdits premiers flux lumineux (5c, 5d) sur l'objet (7), et dans lequel le second moyen de détection (14) détecte la lumière en provenance d'une section d'intersection desdits seconds flux lumineux (5e, 5f).

3. Appareil selon la revendication 2, dans lequel le moyen (10, 11; 10, 15) de décalage de fréquence décale la fréquence de chacun desdits flux lumineux séparés (5a, 5b) par déplacement dudit réseau de diffraction (10).

4. Appareil selon la revendication 3, dans lequel ledit réseau de diffraction (10) est cylindrique et tourne.

5. Appareil selon la revendication 3, dans lequel ledit réseau de diffraction (10) a la forme d'un disque et tourne.

6. Appareil selon la revendication 1, dans lequel ledit moyen (81 à 87) de détection d'information de déplacement détecte l'information de déplacement de l'objet en détectant la différence entre les décalages de fréquence des lumières détectées par le premier moyen de détection (9) et le second moyen de détection (14).

7. Appareil selon la revendication 1, dans lequel le moyen (81 à 87) de détection d'information de déplacement détecte la vitesse en tant qu'information sur le déplacement.

8. Appareil selon la revendication 1, dans lequel un élément de diffraction (13) ou un élément de dispersion est disposé dans ladite position pour la combinaison, et ledit second moyen de détection (14) détecte la lumière générée par la combinaison des flux lumineux diffractés et dispersés desdits seconds flux lumineux (5e, 5f).

9. Procédé de détection d'une information de déplacement d'un objet (7), comprenant les étapes suivantes:

   décalage de la fréquence d'un flux lumineux (3) tombant d'un moyen (1) formant source de lumière au moyen d'un réseau de diffraction (10) par lequel une pluralité de flux lumineux (5a, 5b) séparés décalés en fréquence sont formés;
   division de chacun desdits flux lumineux (5a, 5b) séparés décalés en fréquence en premiers et seconds flux lumineux (5c, 5e; 5d, 5f), lesdits premiers flux lumineux (5c, 5d) étant projetés sur l'objet (7) et lesdits seconds flux lumineux (5e, 5f) étant projetés dans une direction différente, de manière à ne pas tomber sur l'objet (7);
   dans lequel lesdits seconds flux lumineux (5e, 5f) sont combinés dans une position différente de la position à laquelle lesdits flux lumineux séparés (5a, 5b) sont divisés;

dans lequel $(\sin \theta_0/\lambda)$ est maintenu constant, $\theta_0$ étant la moitié de l'angle d'intersection au niveau d'une section d'intersection desdits premiers flux lumineux (5c, 5d) sur l'objet (7) et $\lambda$ étant la longueur d'onde de la lumière;

réalisation d'une première détection pour détecter les premiers flux lumineux (5c, 5d) après réflexion sur l'objet (7), la fréquence de leur lumière ayant subi un décalage Doppler proportionnel à la vitesse de l'objet (7);

réalisation d'une seconde détection pour détecter les seconds flux lumineux (5e, 5f) après leur combinaison, la fréquence de leur lumière n'ayant pas été décalée par un décalage Doppler dû au déplacement de l'objet (7); et

détection de l'information de déplacement de l'objet (7) sur la base de la différence entre les résultats de détection de la première détection et de la seconde détection.

10. Procédé selon la revendication 9, dans lequel, à la première détection, la lumière en provenance d'une section d'intersection desdits premiers flux lumineux (5c, 5d) sur l'objet (7), est détectée, et dans lequel, à la seconde détection, la lumière en provenance d'une section d'intersection desdits seconds flux lumineux (5e, 5f), est détectée.

11. Procédé selon la revendication 10, dans lequel la fréquence de chacun desdits flux lumineux séparés (5a, 5b) est décalée par déplacement dudit réseau de diffraction (10).

12. Procédé selon la revendication 11, dans lequel ledit réseau de diffraction (10) est cylindrique et tourne.

13. Procédé selon la revendication 11, dans lequel ledit réseau de diffraction (10) est en forme de disque et tourne.

14. Procédé selon la revendication 10, dans lequel ladite information de déplacement est détectée en détectant la différence entre les décalages de fréquence de la lumière détectée à la première et à la seconde détections.

F I G. I

F I G. 2

F I G. 3

F I G. 4

# F I G. 5

# F I G. 6A

F I G. 6B

F I G. 7

F I G. 8

# FIG. 9